Europäisches Patentamt

European Patent Office

Office européen des brevets

(19)

(11) Veröffentlichungsnummer: **0 069 264**
**B1**

(12) # EUROPÄISCHE PATENTSCHRIFT

(45) Veröffentlichungstag der Patentschrift:
04.09.85

(51) Int. Cl.⁴: **B 65 D 51/16, B 65 D 33/01, B 65 D 81/20**

(21) Anmeldenummer: 82105367.5

(22) Anmeldetag: 18.06.82

(54) Überdruckventil, insbesondere für flexible Verpackungsbehälter.

(30) Priorität: 29.06.81 DE 3125496

(43) Veröffentlichungstag der Anmeldung:
12.01.83 Patentblatt 83/2

(45) Bekanntmachung des Hinweises auf die Patenterteilung:
04.09.85 Patentblatt 85/36

(84) Benannte Vertragsstaaten:
AT BE CH FR GB IT LI LU NL

(56) Entgegenhaltungen:
DE - A - 1 903 048
DE - A - 2 360 126
DE - A - 2 549 855

(73) Patentinhaber: Wipf AG Verpackungen, Industriestrasse,
CH-8604 Volketswil (CH)

(72) Erfinder: Hollenstein, Erwin Bruno, Oberholzstrasse 1,
CH-8603 Schwerzenbach (CH)

(74) Vertreter: Brose, D. Karl, Dipl.-Ing., Wiener Strasse 2,
D-8023 München-Pullach (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die Erfindung betrifft ein Überdruckventil, insbesondere für flexible Verpackungsbehälter, mit einem mit dem Verpackungsbehälter mediendicht verbindbaren Ventilkörper mit einem eben ausgebildeten Ventilsitzfläche, welcher eine elastisch verformbare Membrane aufnimmt, wobei die Membrane mindestens eine im Ventilgehäuse in einer Ventilsitzfläche angeordnete Ventilöffnung verschliesst, die Ventilöffnung als die eine Stirnseite des Ventilkörpers mit der gegenüberliegenden Stirnseite verbindende Bohrung ausgebildet ist und zwischen Ventilsitzfläche und Membran ein Dichtmittel vorgesehen ist.

Ein derartiges Ventil ist beispielsweise aus der DE-A-2 360 126 bekannt.

Derartige Ventile werden insbesondere bei flexiblen Verpackungsbehältern, welche für die Verpackung von Lebensmitteln durch Heisssiegelung luftdicht verschlossen sind, verwendet, und zwar bei Lebensmitteln, welche während des Transportes und der Lagerung vor den Einwirkungen von Luft-Sauerstoff und Feuchtigkeit geschützt werden müssen. Bei Lebensmitteln, bei denen der durch den Abpackprozess eingeschlossene Sauerstoff zu Qualitätsabfall führt, werden zur Entfernung des eingeschlossenen Sauerstoffes derartige Verpackungen entweder evakuiert und gegebenenfalls anschliessend mit einem Inertgas gefüllt oder mit einem Inertgas Gegenstromprinzip gespült, um den Luft-Sauerstoff zu entfernen.

Bei geröstetem Kaffee stellt sich beispielsweise, insbesondere bei gemahlenem Bohnenkaffee das Problem, dass dieser die Eigenschaft hat, während einer Zeitdauer von zwei bis dreissig Tagen nach Röstdatum erhebliche Gasmengen abzugeben, bei denen es sich in diesem Anwendungsbeispiel hauptsächlich um Kohlendioxyd handelt. Wird nun gerösteter Kaffee in gasdichten Behältern der oben beschriebenen Art verpackt, besteht die Gefahr, dass die Verpackung unter Wirkung des sich durch die Gasabgabe aufbauenden Drucks platzt. Bei der Verpackung derartiger Güter ist man daher dazu übergangen, in die Verpackung Überdruckventile zu integrieren, welche den Druckaufbau verhindern.

Eine Hauptanforderung, die derartige Ventile erfüllen müssen, ist es, da sie in grossen Stückzahlen verwendet werden, dass diese ausgesprochen kostengünstig herstellbar sein müssen. Ferner muss gewährleistet sein, dass kein Luftsauerstoff in die Verpackung eindringen kann, d.h. das Ventil muss als Rückschlagventil in der einen Richtung, d.h. von aussen nach innen absolut zuverlässig und dicht sein. Gleichzeitig muss eine sichere Druckentlastung bei möglichst geringen Öffnungsdrücken in entgegengesetzter Richtung, d.h. von innen nach aussen gewährleistet sein. Nach Betätigung des Ventils durch Überdruck muss das Ventil selbsttätig in die dichtende Stellung zurückkehren können, wobei häufige oder zumindest mehrfache Öffnungs- und Schliessvorgänge mit der gleichen Zuverlässigkeit der absoluten Abdichtung gegenüber dem Luftsauerstoff gewährleistet sein muss. Das Ventil muss ferner gegen mechanische Beanspruchungen, wie sie beim Transport und Umlagern derartiger Verpackungen auftreten können, eine grösstmögliche Unempfindlichkeit aufweisen.

Ein Teil dieser Forderungen wird durch das bekannte Ventil gemäss DE-A-2 549 855 erfüllt, da dieses aus thermoplastischen Kunststoffen billig herstellbar ist. Bei diesem bekannten Ventil ist die in dem Ventilkörper vorgesehene Ventilsitzfläche mit einem zentralen kegelstumpfförmigen Mittelteil versehen, über welchem die Membrane gespannt ist. Die Membrane selbst ist als Entlastungsöffnung mit einer durch den Sitz verschlossenen Bohrung versehen. Ferner ist die Membrane an ihrem Umfang am Ventilkörper angeschweisst. Entlang des Randes des als Ventilsitz dienenden kegelstumpfförmigen Mittelteiles sind eine Anzahl kleiner durchgehender Bohrungen im Ventilkörper vorgesehen, welche bei eingebautem Ventil in die Verpackung führen. Der kegelstumpfförmige Mittelteil enthält ferner eine Anzahl konzentrischer und radial verlaufender Kanäle, welche mit einem Dichtmittel, vorzugsweise Silikonöl gefüllt sind. Die radial verlaufenden Kanäle gehen von den Bohrungen am Rande des Ventilsitzes aus, und führen letztlich zur Spitze des Kegelstumpfes in einen diesen umgebenden Ringkanal, welcher bei auf den Ventilsitz gespannten Membrane die Bohrung in der Membran umgibt.

Ein wesentlicher Nachteil, welcher sich bei der praktischen Verwendung der genannten Ventile herausgestellt hat, besteht darin, dass das die Membran bildende Material am Rande befestigt ist, so dass bei Betätigung des bekannten Ventils durch Überdruck die Elastizität des Materials zu überwinden ist, so dass vergleichsweise grosse Öffnungsdrücke erforderlich sind. Selbst bei lose gespannter Membrane über den kegelstumpfförmigen Teil müssen Reibungen in radialer Richtung überwunden werden, um entsprechende Abströmkanäle zu der Bohrung in der Membrane zu bilden. Dies trägt stark zur Erhöhung des Öffnungsdruckes bei. Ein möglichst niedriger Öffnungsdruck stellt jedoch eine der wesentlichen Sicherheitsanforderungen an derartige Packungen dar.

Bei dem gattungsgemässen Ventil gemäss DE-A-2 360 126 ist eine einzige zentrale Durchgangsbohrung vorgesehen, welche durch eine aus Gummi bestehende Membran abgeschlossen ist, wobei an der der Ventilöffnung gegenüberliegenden Seite der Membran eine am Ventilgehäuse befestigte Nase an der Membran mittig angreift und diese nach unten drückt, so dass die Membran rund um die Öffnung herum relativ fest gegen die Ventilsitzfläche gedrückt wird. Hierbei hat sich als nachteilig erwiesen, dass bei einer solchen Konstruktion relativ hohe Öffnungsdrücke erforderlich sind, um ein Entweichen der innerhalb des Verpackungsbehälters befindlichen Gase durch das Ventil zu ermöglichen, nachdem zum Anheben der Membran von der Ventilsitzfläche relativ hohe Kräfte erforderlich sind.

Gemäss der nicht zum Stand der Technik im Sinne von Artikel 54 und 56 EPÜ gehörenden DE-A-3 147 321 ist bei einem weiteren gattungsgemässen Ventil die eine zentrale Durchgangsbohrung verschliessende Membran mittels eines Klemmteils an zwei gegenüberliegenden Randbereichen gehalten.

Auch bei diesem Ventil ist ein relativ hoher Öffnungsdruck erforderlich, nachdem sich zum Öffnen des Ventils die Membran in ihrer Mitte aufblähen muss, was entweder bei absolut fester Halterung der Membran im Klemmbereich eine Dehnung der Membran erfordert oder aber bei lockerer Halterung der Membran im Klemmbereich voraussetzt, dass die Membran aus ihrer Klemmhalterung herausgezogen wird, was wiederum den Nachteil aufweist, dass ein sicheres Schliessen der Membran nach erfolgtem Druckausgleich nicht mehr gewährleistet erscheint, da sich die Membran lediglich aufgrund ihrer Eigenspannung wieder in ihre Klemmhalterung in ihre Schliessposition zurückschieben muss.

Der vorliegenden Erfindung liegt die Aufgabe zugrunde, das bekannte Ventil der gattungsgemässen Art so zu verbessern, dass es sowohl bei extrem niedrigen Öffnungsdrücken öffnet, und dass dennoch ein sicheres Schliessen des Ventils gewährleistet ist.

Diese Aufgabe wird erfindungsgemäss dadurch gelöst, dass die Membran in einem ausschliesslich auf einer Seite neben der Ventilöffnung befindlichen Bereich an der Ventilsitzfläche gehalten ist und sich im Bereich dieser Ventilöffnung zum Abheben von der Ventilöffnung frei bewegen kann.

Das erfindungsgemässe Ventil weist einen bisher unerreicht niedrigen Öffnungsdruck auf, der beispielsweise lediglich in der Grössenordnung von 1 bis 2 Millibar oder 10 bis 20 mm Wassersäule liegen kann. Die zumindest im Bereich der Ventilöffnungen frei bewegliche Membran sorgt für diese niedrigen Öffnungsdrücke, da kaum mechanische Kräfte überwunden werden müssen. Aufgrund der elastischen Rückstellkräfte der Membran ist ein sicheres Schliessen des Ventils gewährleistet.

Da ferner jede der Ventilöffnungen vorzugsweise durch konzentrische, als Dichtmittel beispielsweise Silikonöl enthaltende Kanäle umgeben ist, ist trotz des niedrigen Öffnungsdruckes dennoch eine absolute Dichtigkeit sichergestellt, da selbst nach mehrmaligem Öffnen immer noch genügend Dichtungsmittel vorhanden ist, so dass das erfindungsgemässe Ventil über die gesamte Gebrauchsdauer voll funktionsfähig bleibt.

Ein weiterer und wesentlicher Vorteil des erfindungsgemässen Ventils besteht darin, dass gemäss weiteren Merkmalen der Erfindung die Ventilöffnungen im Abstand, d.h. nicht konzentriert angeordnet sind und vorzugsweise im Bereich des Aussenumfangs des Ventilkörpers liegen, so dass mindestens einige der Ventilöffnungen in Funktion bleiben, sollte es zu Verstopfungen durch staubförmiges verpacktes Material kommen.

Weitere vorteilhafte Einzelheiten nach der Erfindung ergeben sich aus den Unteransprüchen bzw. der folgenden Beschreibung, in welcher die Erfindung anhand einer in den Zeichnungen beispielsweise veranschaulichten Ausführungsform näher erläutert wird.

Es zeigt:

Fig. 1 eine Teildraufsicht, bei welcher jedoch Ankerteil und Membrane aus Anschaulichkeitsgründen transparent wiedergegeben sind;

Fig. 2 eine Draufsicht auf den Ventilkörper des Ausführungsbeispiels gemäss Fig 1 in einer Teilansicht;

Fig. 3 eine Draufsicht des Ankerteiles des Ausführungsbeispiels gemäss Fig. 1 in einer Teilansicht;

Fig. 4 eine Schnittansicht des Ausführungsbeispiels gemäss Fig. 1;

Fig. 5 die Einzelheit V aus Fig. 4 und

Fig. 6 eine abgewandelte Ausführungsform des Ankerteils zur Verwendung bei dem Ausführungsbeispiel gemäss Fig. 1.

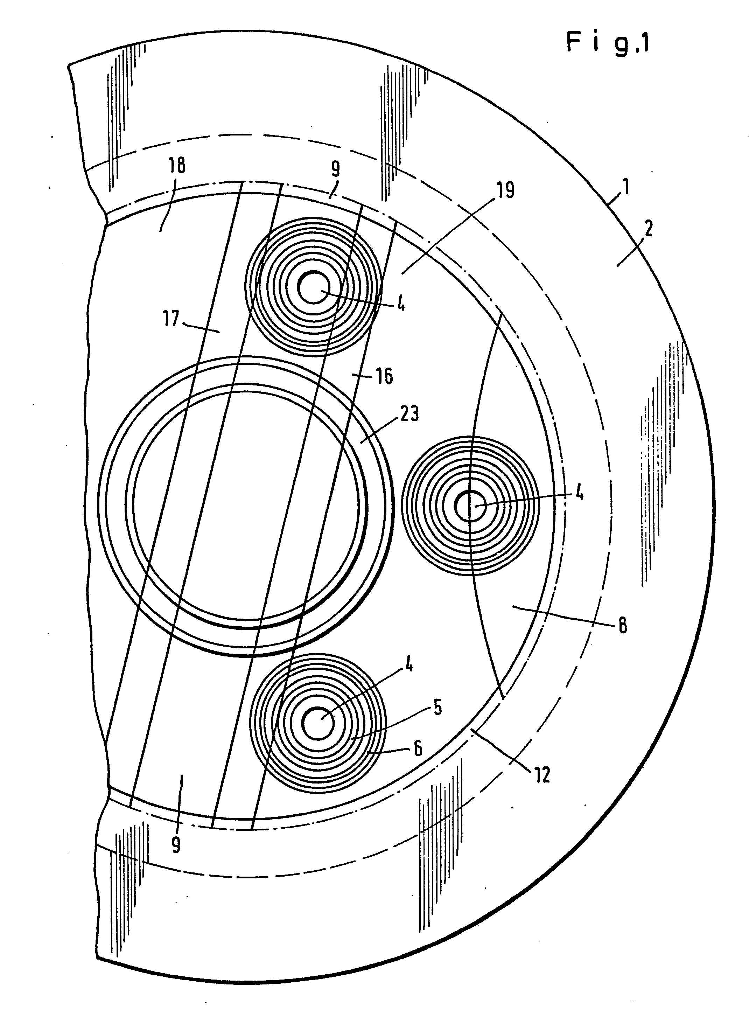

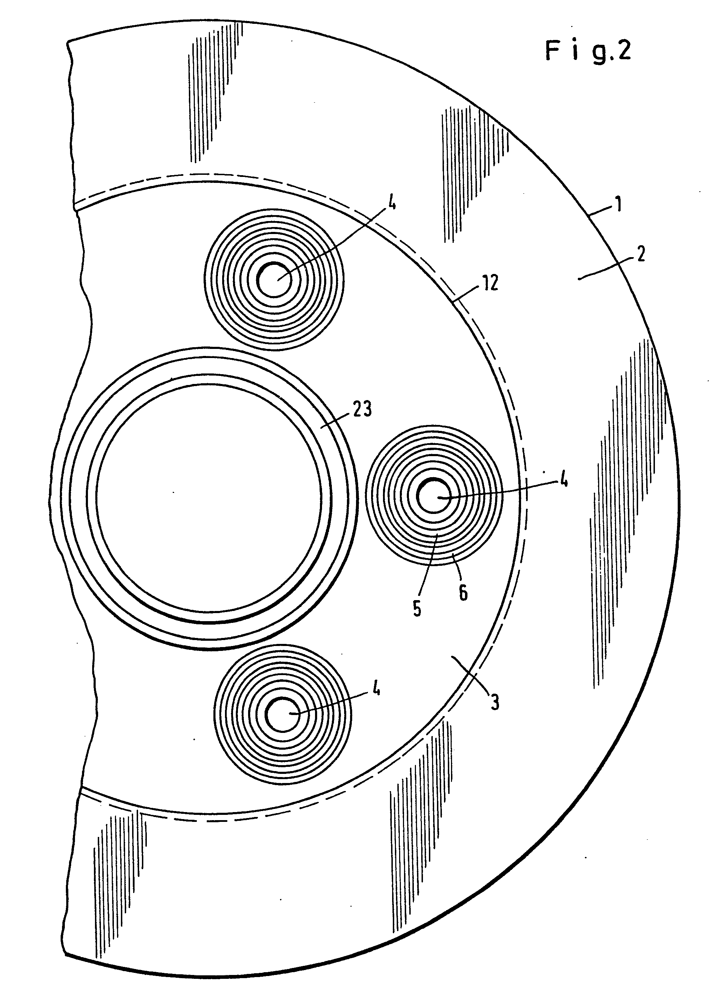

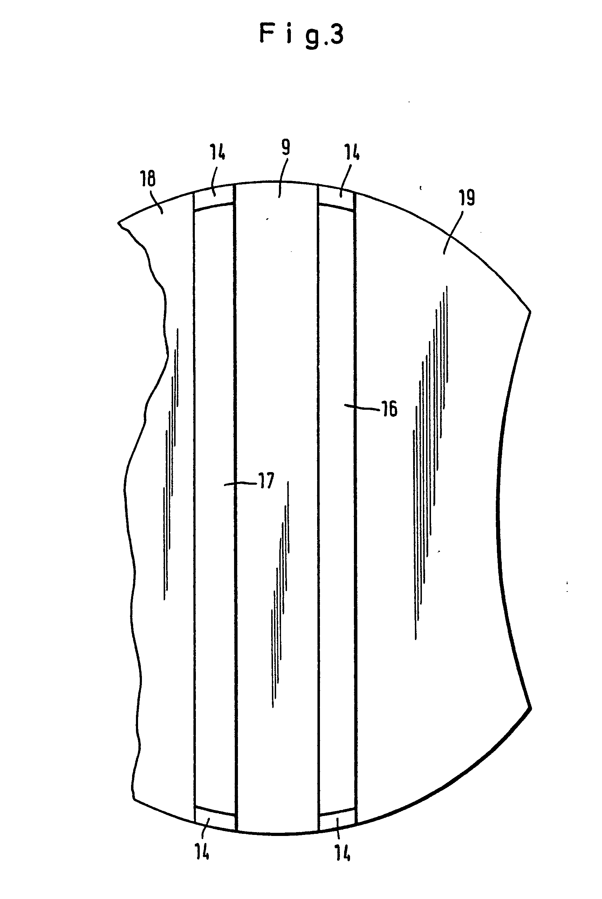

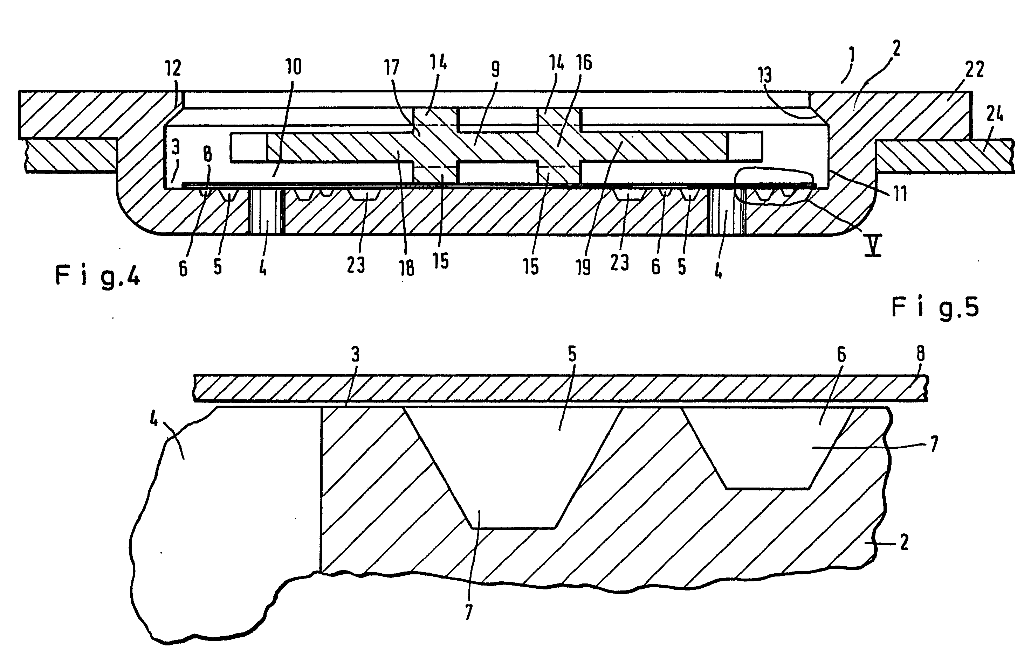

Das Ventil 1 gemäss den Fig. 1 bis 5 besteht im wesentlichen aus einem Ventilkörper 2, in welchem auf einer Ventilsitzfläche 3 aufliegend eine Membran 8 angeordnet ist. Die Membran 8 bildet das Schliessglied des Ventils.

Der Ventilkörper 2 ist bei dem bevorzugten Ausführungsbeispiel als kreisförmige Scheibe von etwa 2 cm Durchmesser ausgebildet. Wie veranschaulicht, ist bei der bevorzugten Ausführungsform die Ventilsitzfläche eben ausgebildet und weist eine Anzahl von Bohrungen 4 auf, welche die eine Stirnseite des Ventilkörpers mit der gegenüberliegenden Stirnseite verbinden. Die Bohrungen 4 bilden die Ventilöffnungen des erfindungsgemässen Ventils. Bei dem veranschaulichten Ausführungsbeispiel sind fünf derartige Bohrungen 4 konzentrisch auf einem gemeinsamen Radius um den Mittelpunkt des Ventilkörpers 2 angeordnet.

Jede der Bohrungen 4 ist in der Ventilsitzfläche 3 mit konzentrischen Kanälen 5 und 6 umgeben, welche einen Dichtmittelvorrat 7 enthalten, bei welchem es sich insbesondere um ein Silikonöl handelt. Dieses Dichtmittel 7 bildet einen nicht dargestellten Film auf der gesamten Ventilsitzfläche, welcher sowohl die Unterseite der Membrane 8 als auch die Ventilsitzfläche 3 vollständig benetzt. Die Kanäle 5 und 6 dienen dazu, als Vorrat nach Betätigung des Ventils 1 diesen Ölfilm zu ergänzen. Zum gleichen Zweck kann zusätzlich noch, wie in den Figuren gezeigt, ein konzentrisch um den Mittelpunkt des Ventilkörpers 2 ausgebildeter Ringkanal 23 vorgesehen sein, welcher ebenfalls mit dem Dichtmittel gefüllt ist.

Wie gezeigt ist der Ventilkörper 2 mit einer trogartigen Vertiefung 10 versehen, deren Boden die Ventilsitzfläche 3 bildet. Die Ventilsitzfläche 3 ist hierbei von einer die Seitenwandung der Vertiefung 10 bildenden Nut 11 begrenzt, deren Oberkante durch eine nach innen auf einen geringeren Durchmesser vorspringende Leiste 12 begrenzt wird. Die der Ventilsitzfläche 3 zugewandte Fläche der Leiste 12 ist als nach innen und oben geneigte Schrägfläche 13 ausgebildet.

Wie gezeigt, ist der Durchmesser der Membrane 8 kleiner als der Durchmesser der Ventilsitzfläche 3 und entspricht bei dem bevorzugten Ausführungsbeispiel dem freien Durchmesser der durch die Leiste 12 definiert wird.

Die Membrane 8 ist auf der Ventilsitzfläche 3 durch einen Ankerteil 9 festgehalten, welcher, wie gezeigt, lediglich einen mittleren Bereich der Membrane 8 gegen die Ventilsitzfläche 3 drückt.

Bei dem bevorzugten Ausführungsbeispiel besteht der Ankerteil 9 im wesentlichen aus einem liegenden Doppel-T-Träger 16, 17, welcher mit seitlichen Ansätzen 18, 19 versehen ist, die die Membran 8 beim eingesetzten Zustand des Ankerteils 9 teilweise überdeckt. Die Form eines Doppel-T-Trägers wurde aus Gründen der Materialersparnis gewählt, wobei die seitlichen Ansätze 18, 19 lediglich eine Schutzfunktion gegen Beschädigung der Membrane 8 von aussen haben. Die seitlichen Ansätze 18, 19 verlaufen entsprechend im Abstand oberhalb der Membrane 8.

Bei abgewandelten Ausführungsformen kann der Träger die Form einer einfachen geraden Stange haben. Ebenso können die seitlichen Ansätze 18, 19 weggelassen sein. Um den mit dem Verschweissen irgendwelcher Verankerungsteile verbundenen Aufwand zu vermeiden, kommt es erfindungsgemäss lediglich darauf an, den Ankerteil 9 form- oder kraftschlüssig an dem Ventilkörper 2 derart zu verankern, dass die Membrane 8 lediglich in einem mittleren Teil gehalten ist.

Bei dem bevorzugten Ausführungsbeispiel sind die beiden Enden des Doppel-T-Trägers 16, 17 mit der Schrägfläche 13 entsprechenden Schrägflächen 14, 15 versehen, welche beim Hineindrücken des Ankerteiles 8 hinter der Schrägfläche 13 einrasten können. Um die Notwendigkeit zu vermeiden, dass bei der Herstellung derartiger Ventile 1 der Ankerteil 9 orientiert dargeboten werden muss, sind die Schrägflächen 14, 15 sowohl auf der Oberseite als auch auf der Unterseite des Ankerteiles 9 vorgesehen.

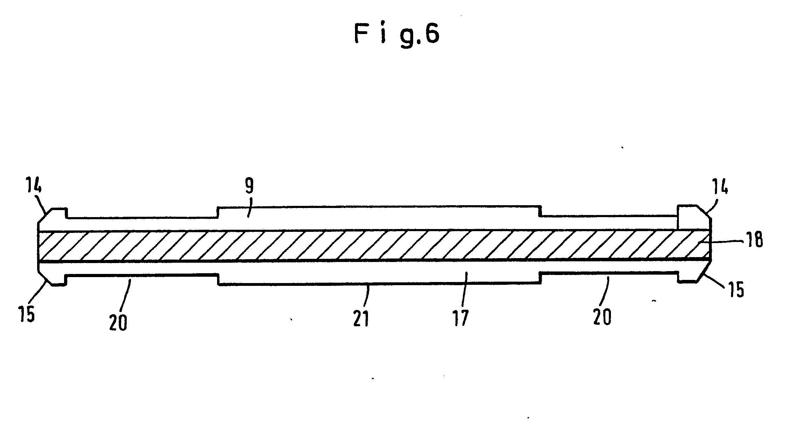

Da, wie sich aus der Ansicht gemäss Fig. 1 ergibt, es vorkommen kann, dass die Auflagefläche des Ankerteiles beim Zusammenbau einer der Ventilbohrungen 4 überdecken kann, ist in Fig. 6 eine abgewandelte Ausführungsform des Ankerteiles gezeigt, bei welcher eine derartige überdeckte Bohrung dennoch voll funktionsfähig bleibt. Bei dieser Ausführungsform weist der Ankerteil an der Anordnung der Ventilöffnung 4 entsprechenden Stellen Aussparungen 20 auf, welche derart angeordnet sind, dass an diesen Stellen nach Einsetzen des Ankerteiles 9 ein Abstand zwischen der Oberfläche der Membrane 8 und der diesen zugewandten Fläche 21 des Ankerteiles gewährleistet ist. Wegen der Anordnung einer Anzahl von Bohrungen 4 in der Ventilsitzfläche 3 ist diese Ausführungsform jedoch nicht unbedingt erforderlich.

Um das Ventil 1 mit einer Verpackung zu verbinden, weist der Ventilkörper 2 noch einen nach aussen gerichteten Flansch 22 an seiner Oberkante auf, an welchem der Ventilkörper 2 mit einer Verpackung 24 mediendicht verklebt oder verschweisst werden kann.

Sämtliche Bestandteile des Ventils, d.h. der Ventilkörper 2, die Membrane 8 und der Ankerteil 9 sind bevorzugt aus einem thermoplastischem Kunststoff hergestellt, wobei Polyäthylen, Niederdruckpolyäthylen oder Polypropylen bevorzugt sind.

Die Funktionsweise des erfindungsgemässen Ventils ist folgendermassen:

Falls der Aussendruck grösser ist als der Innendruck wird die Membrane 8 unter Einfluss des Aussendruckes gegen die Ventilsitzfläche 3 gedrückt. Das in den Kanälen 5, 6 und 23 vorhandene Dichtmittel unterstützt hierbei eine einwandfreie Abdichtung.

Falls sich im Inneren der Verpackung ein Überdruck aufbaut, wird die oberhalb der Bohrungen 4 liegende Fläche der Membran 8 mit Druck beaufschlagt. Sobald der Innendruck einen gewissen im Vergleich zum Stand der Technik extrem niedrigen Wert von ca. 1 bis 2 Millibar erreicht hat, wird die Membran 8 vom Ventilsitz 3 abgehoben. Da sich beidseitig des Trägers 16, 17 die Membran 8 vollständig frei klappenartig nach oben bewegen kann, reicht ein geringer Drucküberschuss im Inneren des Behälters aus, diesen Öffnungsvorgang einzuleiten. Die Membran muss hierbei keinerlei Reibung in radialer Richtung überwinden. Da ferner eine Anzahl von Bohrungen 4 mit dazugehörigen Kanälen 5 und 6 vorgesehen ist, ist es gewährleistet, dass mindestens zwei bis drei Bohrungen 4 in Funktion sind. Bei gemahlenem Kaffee ist es in vielen Fällen nicht zu vermeiden, dass Kaffeestaub in die Abblasbohrungen gelangt, diese verstopft und in der Funktionsweise beeinträchtigt oder die Funktion unmöglich macht. Bei dem erfindungsgemässen Ventil 1 ist dies vergleichsweise unschädlich. Darüber hinaus können auch eventuell kleinste in die Ventilsitzfläche 3 gelangende Partikel die Funktion kaum beeinträchtigen, da die sich in einem der Kanäle absetzen können.

Ist der Innendruck nach dem Abblasen unter dem Öffnungsdruck abgesunken, legt sich die elastische Membran 8 wieder auf den Ventilsitz 3 auf, und dichtet den Innenraum des Behälters erneut gegen die Umgebung ab. Aufgrund der Elastizität ist der Schliessdruck der Membran 8 etwas höher als der Aussendruck. Sobald sich beispielsweise durch Entgasen des verpackten Gutes wieder eine ausreichende Druckdifferenz aufgebaut hat, wiederholt sich der Vorgang des Abblasens.

Da ferner sämtliche Bauteile des erfindungsgemässen Ventils 1 lediglich mechanisch, d.h. durch Form- oder Kraftschluss miteinander verbunden werden, ist man in der Materialwahl für die einzelnen Bauteile nicht beschränkt. So lässt sich beispielsweise der Öffnungsdruck des Ventils in weiten Grenzen durch entsprechende Wahl des Materials und der Wandstärke der Membran 8 wählen. Darüber hinaus ist es mit Vorteil möglich, den Ankerteil 9 farbig auszubilden, so dass dieser entweder der Farbe der fertigen Verpackung angepasst werden kann oder quasi als Farbkodierung ein Anzeichen für den Öffnungsdruck des Ventils darstellt.

Obenstehend wurde die Erfindung anhand von zwei möglichen Ausführungsbeispielen näher erläutert. Es ist offensichtlich, dass dem Fachmann auf diesem Gebiet verschiedene Abänderungen und Abwandlungen der beschriebenen Konstruktion offenbart sind, ohne vom Grundgedanken der Erfindung abzuweichen. So lässt sich beispielsweise der vorteilhaft niedrige Öffnungsdruck eines Ventils nach der Erfindung auch dadurch realisieren, dass anstelle eines den Ventilkörper 2 überspannenden Ankerteiles ein knopfartiger Teil lediglich im Mittelbereich der Membran 8 verankert wird. Dies kann mechanisch oder durch Punktschweissen in der Mitte geschehen.

Sämtliche aus der Beschreibung, den Ansprüchen und Zeichnungen hervorgehende Merkmale und Vorteile der Erfindung, einschliesslich konstruktiver Einzelheiten und räumlicher Anordnungen, können sowohl für sich als auch in beliebiger Kombination erfindungswesentlich sein.

## Patentansprüche

1. Überdruckventil, insbesondere für flexible Verpackungsbehälter, mit einem mit dem Verpackungsbehälter mediendicht verbindbaren Ventilkörper mit einer eben ausgebildeten Ventilsitzfläche, welcher eine elastisch verformbare Membrane aufnimmt, wobei die Membrane mindestens eine im Ventilgehäuse in einer Ventilsitzfläche angeordnete Ventilöffnung verschliesst, die Ventilöffnung als die eine Stirnseite des Ventilkörpers mit der gegenüberliegenden Stirnseite verbindende Bohrung ausgebildet ist und zwischen Ventilsitzfläche und Membran ein Dichtmittel vorgesehen ist, dadurch gekennzeichnet, dass die Membrane (8) in einem ausschliesslich auf einer Seite neben der Ventilöffnung (4) befindlichen Bereich an der Ventilsitzfläche (3) gehalten ist und sich im Bereich dieser Ventilöffnung (4) zum Abheben von der Ventilöffnung frei bewegen kann.

2. Überdruckventil nach Anspruch 1, dadurch gekennzeichnet, dass die Ventilöffnung (4) mit Kanälen (5, 6) in der Ventilsitzfläche (3) zur Aufnahme von fliessfähigem Dichtmittel umgeben ist.

3. Überdruckventil nach Anspruch 2, dadurch gekennzeichnet, dass die Kanäle (5, 6) konzentrisch um die Ventilsitzfläche (3) angeordnet sind.

4. Überdruckventil nach einem der vorhergehenden Ansprüche, dadurch gekennzeichnet, dass der Ventilkörper (2) eine Mehrzahl von Ventilöffnungen (4) aufweist.

5. Überdruckventil nach Anspruch 4, dadurch gekennzeichnet, dass die Ventilöffnungen (4) auf einem gemeinsamen Radius um den Mittelpunkt der Ventilsitzfläche (3) angeordnet sind.

6. Überdruckventil nach Anspruch 4 oder 5, dadurch gekennzeichnet, dass die Membrane (8) nur in einem mittleren Bereich zwischen den Ventilöffnungen (4) gehalten ist.

7. Überdruckventil nach einem der Ansprüche 4 bis 6, dadurch gekennzeichnet, dass fünf Ventilbohrungen (4) vorgesehen sind.

8. Überdruckventil nach einem der vorhergehenden Ansprüche, dadurch gekennzeichnet, dass die Membrane (8) lose eingelegt und durch einen mit dem Ventilkörper (2) form- oder kraftschlüssig verbindbaren Ankerteil gehalten ist, welcher auf der Aussenseite der Membrane anliegt.

9. Überdruckventil nach einem der vorhergehenden Ansprüche, dadurch gekennzeichnet, dass der Ventilkörper (2) eine trogartige Vertiefung (10) aufweist, deren Boden die Ventilsitzfläche (3) bildet.

10. Überdruckventil nach Anspruch 8 oder 9, dadurch gekennzeichnet, dass in der die Ventilsitzfläche (3) umgebenden Seitenwandung der Vertiefung (10) eine Nut (11) vorgesehen ist, in welche der Ankerteil (9) einrastbar ist.

11. Überdruckventil nach Anspruch 8 oder 9, dadurch gekennzeichnet, dass der Ventilkörper (2) an seiner Oberseite eine radial nach innen vorspringende, die Vertiefung (10) umgebende Leiste (12) aufweist, hinter der der Ankerteil (9) einrastet, dass die Leiste (12) auf der der Ventilsitzfläche (3) zugewandten Seite eine nach oben geneigte Schrägfläche (13) aufweist, und dass der Ankerteil (9) mit entsprechenden Schrägflächen (14, 15) versehen ist.

12. Überdruckventil nach einem der vorstehenden Ansprüche, dadurch gekennzeichnet, dass der Ankerteil (9) als sich quer über die Vertiefung (10) erstreckender Träger (16, 17) ausgebildet ist und dass der Träger (16, 17) als auf der Seite liegender Doppel-T-Träger (16, 17) ausgebildet ist.

13. Überdruckventil nach Anspruch 12, dadurch gekennzeichnet, dass an dem Träger (16, 17) seitliche Ansätze (18, 19) einstückig ausgebildet sind, welche im Abstand oberhalb der Membrane (8) liegen.

14. Überdruckventil nach einem der vorstehenden Ansprüche, dadurch gekennzeichnet, dass der Ankerteil (9) an der Anordnung der Ventilöffnungen (4) entsprechenden Stellen Aussparungen (20) aufweist, derart, dass an diesen Stellen ein Abstand zwischen der Oberfläche der Membrane (8) und der diesen zugewandten Fläche (21) des Ankerteils gewährleistet ist.

15. Überdruckventil nach einem der vorstehenden Ansprüche, dadurch gekennzeichnet, dass der Ventilkörper (2) und/oder der Ankerteil (9) und/oder die Membrane (8) aus einem thermoplastischen Kunststoff, wie Polyäthylen, Niederdruck-Polyäthylen oder Polypropylen besteht.

16. Überdruckventil nach einem der vorstehenden Ansprüche, dadurch gekennzeichnet, dass der Ventilkörper (2) an seiner äusseren Oberkante einen nach aussen gerichteten Flansch (22) für die mediendichte Verbindung mit einer Verpackung aufweist.

17. Ventil nach einem der vorstehenden Ansprüche, dadurch gekennzeichnet, dass in der Ventilsitzfläche (3) ein zusätzlicher Ringkanal (23) für das Dichtmittel (7) konzentrisch zum Ventilsitz (3) vorgesehen ist.

## Claims

1. An overpressure valve especially for a flexibly walled package, having a valve body designed to be fixed fluid-tightly in said wall, with said valve body having a level valve seat for taking up an elastic diaphragm which shuts at least one valve opening arranged in a valve seat in the valve housing, with the valve opening designed to ba a hole to connect one face of said valve body with the opposite face, and with a sealant provided between said valve seat and said diaphragm, characterized in that diaphragm (8) is supported at the valve seat (3) in an area extending only on one side beside the valve opening (4), allowing the diaphragm to be freely moved within the area of said valve opening (4) in order to be lifted off said valve opening.

2. The overpressure valve according to claim 1, characterized in that valve opening (4) is surrounded by channels (5, 6) in valve seat (3) for taking up a fluid sealant.

3. The overpressure valve according to claim 2, characterized in that channels (5, 6) are arranged concentrically around valve seat (3).

4. The overpressure valve according to one of the preceding claims, characterized in that valve body (2) is provided with a multitude of valve openings (4).

5. The overpressure valve according to claim 4, characterized in that valve openings (4) on a common radius are arranged around the middle point of valve seat (3).

6. The overpressure valve according to claim 4 or 5, characterized in that diaphragm (8) is supported only in an area in the middle between valve openings (4).

7. The overpressure valve according to one of claims 4 to 6, characterized in that there are five holes (4).

8. The overpressure valve according to one of the preceding claims, characterized in that diaphragm (8) is loosely placed in position and is kept in position by means of a keeper which is form-locking or force-fitted into or on valve body (2) and is resting against the outher face of said diaphragm.

9. The overpressure valve according to one of the preceding claims, characterized in that valve body (2) is a pot-like hollow space (10) the floor of which being valve seat (3).

10. The overpressure valve according to claims 8 or 9, characterized in that a groove (11) extends in the sidewall of hollow space (10), surrounding valve seat (3), into which keeper (9) may be keyed.

11. The overpressure valve according to claims 8 or 9, characterized in that valve body (2) has at its top a radially and inwardly protruding running lip (12) surrounding hollow space (10), behind which keeper (9) is locked in position, in that the running lip (12) at its face turning towards valve seat (3) has a sloping face (13) inclining upwardly, and in that keeper (9) is provided with answering sloping faces (14, 15).

12. The overpressure valve according to one of the preceding claims, characterized in that keeper (9) is in the form of a girder (16, 17) stretching over hollow space (10) and in that said girder (16, 17) is a horizontal I-girder.

13. The overpressure valve according to claim 12, characterized in that girder (16, 17) has side wings forming parts thereof, spaced from said diaphragm.

14. The overpressure valve according to one of the preceding claims, characterized in that keeper (9) at places corresponding with the valve opening (4) shows recesses (20) of such a kind as to guarantee for a space at these places between the surface of diaphragm (8) and part (12) of the keeper which faces said diaphragm.

15. The overpressure valve according to one of the preceding claims, characterized in that valve body (2) and/or keeper (9) and/or diaphragm (8) are made of thermoplastic material such as polyethylene, low-pressure polyethylene or polypropylene.

16. The overpressure valve according to one of the preceding claims, characterized in that valve body (2) has an outward top edge with an outwardly running flange (22) for making a fluid-tight joint with a package.

17. The valve according to one of the preceding claims, characterized in that a further ring-like channel (23) for the sealant (7) is provided in the valve seat (3) and concentric thereto.

**Revendications**

1. Soupape de surpression, notamment pour récipients d'emballage souples, comportant un corps de soupape pouvant être relié de façon étanche au milieu fluide au récipient d'emballage, comportant une surface de siège de soupape de conformation plane qui reçoit une membrane déformable élastiquement, la membrane obturant au moins une ouverture de soupape située dans le boîtier de la soupape dans une surface de siège se soupape, l'ouverture de soupape étant réalisée sous la forme d'un alésage reliant l'une des faces frontales du corps de soupape à la face frontale opposée et un agent d'étanchéité étant disposé entre la surface de siège de soupape et la membrane, caractérisée en ce que la membrane (8) est retenue sur la surface de siège de soupape (3) dans une zone se trouvant exclusivement d'un côté près de l'ouverture de soupape et peut se déplacer librement, dans la zone de cette ouverture de soupape (4), pour s'écarter de l'ouverture de soupape.

2. Soupape de surpression selon la revendication 1, caractérisée en ce que l'ouverture de soupape (4) est entourée de canaux (5, 6) dans la surface de siège de soupape (3) pour recevoir un agent d'étanchéité fluide.

3. Soupape de surpression selon la revendication 2, caractérisée en ce que les canaux (5, 6) sont disposés concentriquement autour de la surface de siège de soupape (3).

4. Soupape de surpression selon l'une quelconque des revendications précédentes, caractérisée en ce que le corps de soupape (2) comporte une pluralité d'ouvertures de soupape (4).

5. Soupape de surpression selon la revendication 4, caractérisée en ce que les ouvertures de soupape (4) sont disposées sur un cercle commun, autour du centre de la surface de siège de soupape (3).

6. Soupape de surpression selon la revendication 4 ou 5, caractérisée en ce que la membrane (8) est retenue seulement dans une zone centrale entre les ouvertures de soupape (4).

7. Soupape de surpression selon l'une des revendications 4 à 6, caractérisée en ce qu'elle comporte cinq ouvertures de soupape (4).

8. Soupape de surpression selon l'une des revendications précédentes, caractérisée en ce que la membrane (8) est insérée de façon libre et est retenue par une pièce d'ancrage pouvant être raccordée au corps (2) de la soupape par concordance de formes ou par application d'une force, et qui s'applique sur le côté externe de la membrane.

9. Soupape de surpression selon l'une des revendications précédentes, caractérisée en ce que le corps (2) de la soupape comprend un enfoncement (10) en forme d'auge, dont le fond constitue la surface (3) du siège de la soupape.

10. Soupape de surpression selon la revendication 8 ou 9, caractérisée en ce qu'une gorge (11) est prévue dans la paroi latérale de l'enfoncement (10) qui entoure la surface (3) du siège de la soupape, gorge dans laquelle peut être enclenchée la pièce d'ancrage (9).

11. Soupape de surpression selon la revendication 8 ou 9, caractérisée en ce que le corps (2) de la soupape présente sur son côté supérieur une nervure (12) faisant saillie vers l'intérieur en direction radiale et entourant l'enfoncement (10), à l'arrière de laquelle s'enclenche la pièce d'ancrage (9), et en ce que la nervure (12) comprend sur le côté qui est tourné vers la surface (3) du siège de la soupape une surface en oblique (13) inclinée vers le haut et en ce que la pièce d'ancrage (9) comprend des surfaces en oblique correspondantes (14, 15).

12. Soupape de surpression selon l'une des revendications précédentes, caractérisée en ce que la pièce d'ancrage (9) est constitué sous forme d'un support (16, 17) s'étendant au-dessus de l'enfoncement (10) et en ce que le support (16, 17) est constitué sous forme d'un support en double T (16, 17) s'appliquant sur le côté.

13. Soupape de surpression selon la revendication 12, caractérisée en ce que le support (16, 17) sont constitués des prolongements latéraux (18, 19) d'un seul tenant qui sont disposés à une certaine distance au-dessus de la membrane (8).

14. Soupape de surpression selon l'une des revendications précédentes, caractérisée en ce que la pièce d'ancrage (9) comprend en des emplacements qui correspondent à la disposition des ouvertures (4) de la soupape des parties creusée (20) de manière qu'on soit assuré dans ces emplacements d'un intervalle entre la surface de la membrane (8) et la surface (21) de la pièce d'ancrage tounée vers cette dernière.

15. Soupape de surpression selon l'une des revendications précédentes, caractérisée en ce que le corps (2) de la soupape et/ou la pièce d'ancrage (9) et/ou la membrane (8) est constitué(e) par une matière thermoplastique telle que du polyéthylène, du polyéthylène basse pression ou du polypropylène.

16. Soupape de surpression selon l'une des revendications précédentes, caractérisée en ce que le corps (2) de la soupape comprend sur son bord supérieur externe une collerette (22) dirigée vers l'extérieur et destinée à la liaison étanche avec un emballage.

17. Soupape de surpression selon l'une des revendications précédentes, caractérisée en ce qu'une canalisation annulaire additionnelle (23) destinée à la substance d'étanchéité (7) est prévue dans la surface (3) du siège de la soupape concentriquement au siège (3) de la soupape, en ce que la canalisation annulaire additionnelle est prévue radialement à l'intérieur des trous (4) et en ce que la canalisation annulaire additionnelle (23) est disposée radialement à l'extérieur des trous (4).

F i g .1

F i g.2

# F i g.3

Fig.4

Fig.5

0 069 264

# Fig.6